# EUROPEAN PATENT APPLICATION

(11) **EP 4 837 408 A1**
(43) Date of publication of application: **11.11.2026**
(21) Application number: 25174866.1
(22) Date of filing: 07.05.2025
(51) Int. Cl.: A01D 41/12, A01F 12/40

(54) **STRAW SPREADER FOR A COMBINE HARVESTER**

(71) Applicant: CNH Industrial Belgium N.V., 8210 Zedelgem (BE)
(72) Inventor: Lippens, Sven, 8210 Zedelgem (BE); Tallir, Frederik, 8210 Zedelgem (BE); Deruyter, Lucas, 8210 Zedelgem (BE); Jongmans, Dré W.J., 8210 Zedelgem (BE); Missotten, Bart M.A., 8210 Zedelgem (BE)
(74) Representative: CNH Industrial IP Department

(57) **Abstract**

An agricultural harvester (10) comprises a crop chopper (72), a crop spreader (74), a crop divider (80), and an actuator. The crop spreader (74) is arranged to receive the chopped crop from the crop chopper (72) and comprises a left spreader unit (74A) and a right spreader unit (74B), each configured to spread a portion of the chopped crop towards respective opposite sides of the harvester (10). The crop divider (80) is arranged downstream the crop chopper (72) and upstream the crop spreader (74), and arranged to direct a first portion of the chopped crop towards the left spreader unit (74A) and a second portion of the chopped crop towards the right spreader unit (74B). The actuator is arranged to move the crop divider (80) relative to the crop spreader (74) in order to adjust a ratio of the first portion and the second portion.

## Description

### TECHNICAL FIELD

The present invention relates to a

### BACKGROUND

Many agricultural harvesters are designed to harvest crops and leave some or all of the harvested crop behind on the field. In a combine harvester, for example, the harvested crop is threshed to separate the grain therefrom, and the remaining straw is transported to the rear of the combine harvester for release on the field. The release of straw residue behind the combine harvester may be done by dropping the straw in a swath on the field, for example to allow it being picked up by a baler machine later. Often, however, the straw residue is chopped into smaller pieces by a straw chopper and spread over the field by a spreader system.

A typical design for such a straw chopper uses a rotating shaft or drum with a plurality of knives extending radially therefrom. The shaft or drum is at least partly located inside a chopper housing and oriented at least approximately in parallel with the field and perpendicular to the driving direction of the harvester. The unchopped straw is received at an inlet of the chopper housing that is typically located at the top and/or front end of the chopper housing. Chopped straw is released from an outlet of the chopper housing that is typically located more to the bottom and/or rear end of the chopper housing. In use the knives rotate around the rotational axis of the shaft or drum at high speed. Counter knives are usually positioned adjacent the chopper housing outlet, such that the straw is chopped between a rotating knife and a stationary counter knife. When a plurality of knives are provided along the width of the straw chopper, the straw is chopped into many smaller pieces before it leaves the chopper housing.

The spreader system typically comprises two spreader units, one on the left and one on the right side of the harvester. The spreader units are configured to spread about half of the chopped crop towards each side of the harvester. Ideally, the chopped crop is spread across the full width of the harvester or harvester-header combination. In the event of sidewinds and/or a lateral inclination of the field, however, the chopped crop is spread further into the downwind and downhill direction than into the upwind and uphill direction. In the European patent application published as EP 3 632 199 A1, it is disclosed to adjust a rotational speed of one of the two spreader units or an angle of a residue deflector for deflecting the trajectory of the chopped crop as it leaves the spreader unit. These adjustments allow a control system of the harvester to compensate for the sidewind or lateral inclination and ensure that the chopped crop is spread across the full width of the harvester. It has, however, been observed that, while spreader control systems as described EP 3 632 199 A1 do help to distribute crop residue across the full width of the harvester, the crop residue is not always evenly distributed.

It is an aim of the present invention to address one or more disadvantages associated with the prior art.

### SUMMARY OF THE INVENTION

According to an aspect of the invention there is provided an agricultural harvester comprising a crop chopper, a crop spreader, a crop divider, and an actuator. The crop chopper comprises an inlet for receiving unchopped crop and an outlet for releasing chopped crop. The crop spreader is arranged to receive the chopped crop from the crop chopper and comprises a left spreader unit and a right spreader unit, each configured to spread a portion of the chopped crop towards respective opposite sides of the harvester. The crop divider is arranged downstream the crop chopper and upstream the crop spreader, and arranged to direct a first portion of the chopped crop towards the left spreader unit and a second portion of the chopped crop towards the right spreader unit. The actuator is arranged to move the crop divider relative to the crop spreader in order to adjust a ratio of the first portion and the second portion.

By adjusting the ratio of the first and second portions, it is made possible to feed more chopped crop through the spreader unit that covers a larger portion of the total spreading width behind the harvester. As a result, the distribution of crop behind the harvester will be more even. When, for example, the rotational speeds or the residue deflectors of the spreader units are such that the left spreader unit covers a wider area than the right spreader unit, the actuator can now be used to ensure that the left spreader unit spreads more material than the right spreader unit to compensate for the larger surface area this material needs to cover.

Typically, the actuator will be used to move the crop divider in such a way as to spread more material in an upwind or uphill direction than in a downwind or downhill direction. The actuator is similarly useful when the chopped crop is not spread over the full width of the harvester or the harvester-header combination. This can, for example, be the case when the currently harvested area partially overlaps with a previously harvested area and the overlapping area is already covered with chopped crop.

Similarly, the movable crop divider may be controlled by the actuator when harvesting around a corner. For example, when taking a left turn while harvesting and spreading crop residue, the back of the combine turns to the right, away from the edge of the current harvest pass. As a result, the left spreader needs to cover a bigger area than the right spreader. By properly controlled movement of the crop divider, it can then be ensured that a larger portion of the total spread crop residue is directed to the left spreader. This controlled adjustment of the crop divider position will thus lead to a more even distribution of the crop residue over the field.

In embodiments of the invention, the actuator is arranged to move the crop divider sidewards from a central position between the left spreader unit and the right spreader unit. In the central or neutral position, the ratio of the of the first portion and the second portion will approximately be 1:1, i.e. both spreader units spread substantially the same amount of chopped crop. When moving the crop divider sidewards to the left, the second portion of the chopped crop, i.e. the chopped crop portion fed into the right spreader unit, increases. When moving the crop divider sidewards to the right, the first portion of the chopped crop, i.e. the chopped crop portion fed into the left spreader unit, increases. Moving the crop divider sidewards may, e.g., be effected by moving the crop divider along a rail or rails, but many other mechanical arrangements may enable the same.

In other embodiments, the actuator is arranged to pivot the crop divider to and from a neutral orientation wherein the crop divider is substantially aligned with a driving direction of the harvester. Again, in the central or neutral position, the ratio of the of the first portion and the second portion will approximately be 1:1. The effect of a rotation of the crop divider on this ratio partly depends on a position of the pivot point relative to the crop divider. However, generally, pivoting the downstream end of the crop divider to the left will cause more chopped crop coming from the right side of the crop chopper to be fed into the left spreader unit, thereby increasing the ratio.

In special embodiments, the actuator may be arranged to cause a combination of a translational and a rotational motion of the crop divider.

In exemplary embodiments, the actuator is and electromechanical actuator, a pneumatic actuator, or a hydraulic actuator. The agricultural harvester preferably comprises a controller, coupled to the actuator for controlling the actuator. The control of the actuator may be performed by a human operator, for example through a graphical user interface on a display screen visible from a seat in a driver cabin of the agricultural harvester. Preferably, the control of the actuator is partly or fully automated, and based on sensor input and/or digitally stored information about the field, the crop, and the harvester.

The agricultural harvester may further comprise at least one reciprocating grain sieve, configured to move back and forth in a direction substantially aligned with a driving direction of the harvester. This reciprocating grain sieve is provided for separating the grain kernels from the chaff. While the grain kernels fall through the grain sieve and are eventually gathered in a clean grain tank, the chaff is blown out over the surface of the grain sieve.

The crop divider may be mounted to the grain sieve for reciprocating therewith. While the crop divider moves forward and backward together with the grain sieve, the actuator may move the crop divider sidewards relative to the grain sieve, or rotate the crop divider with similar effect. The crop divider is positioned such that during a substantial portion (up to 100%) of the reciprocating motion of the grain sieve, the crop divider is positioned in the crop flow from the crop chopper to the crop spreader. An advantage of mounting the crop divider to the grain sieve is that it does not only divide the chopped crop comping from the crop chopper in two portions, but also the chaff coming from grain sieve.

The crop divider may, for example, be mounted on a rail mounted on or under a downstream end of the grain sieve, wherein the rail facilitates sideward movement of the crop divider. Alternatively, the crop divider is pivotably mounted to the grain sieve. Instead of mounting the crop divider directly to the grain sieve itself, it may be preferred to mount the crop divider to a separate frame that is mounted to and extends from the downstream end of the grain sieve.

In other embodiments, the crop divider is movably mounted to the crop spreader. When positioned near the inlet of the crop spreader, the crop divider is optimally positioned to split and direct the crop flow from the crop chopper to the crop spreader. Moving the crop divider, for example by translation or rotation, then results in a larger portion of the crop flow being directed into one or the other spreader unit.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used.
Figure 2 schematically shows a rear view of part of elements of a combine harvester according to an embodiment of the invention.
Figures 3 to 6 schematically show top views of part of elements of a combine harvester according to some embodiments of the invention.

### DETAILED DESCRIPTION

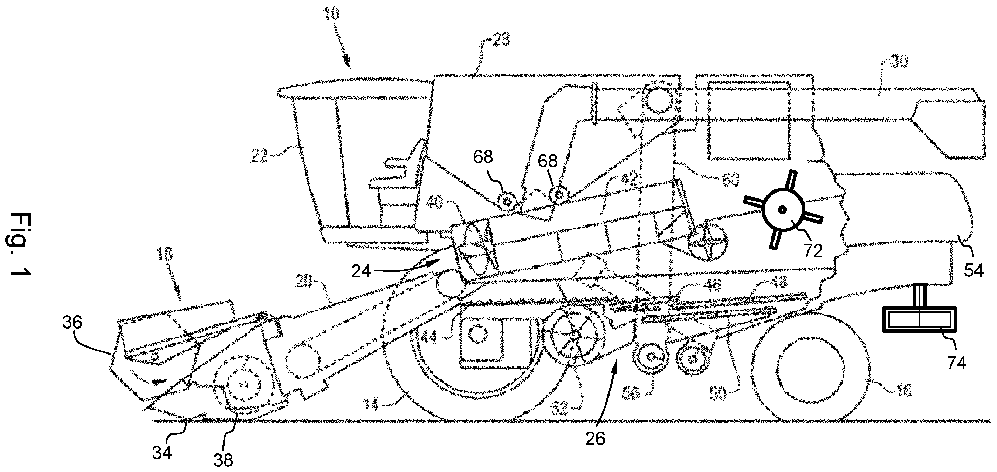

Figure 1 schematically shows an agricultural harvester in the form of a combine harvester 10. A combine harvester 10 as shown in Figure 1 generally includes front and rear ground engaging wheels 14, 16, a header 18, a feeder 20, an operator cabin 22, a threshing and separation system 24, a cleaning system 26, a grain tank 28 and an unloading tube 30.

The header 18 is mounted to the front of the combine harvester 10 and includes a cutter bar 34 for severing crops from a field during forward motion of the harvester 10. A single or multi-segment rotatable reel 36 feeds the crop into the header 18, and an intake auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a straw chopper 72 and spread over the field across the full width of the header 18 by a spreader system 74. The spreader system 74 typically comprises a left rotary spreader 74A and a right rotary spreader 74B, each spreading the chopped crop residue received from the straw chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

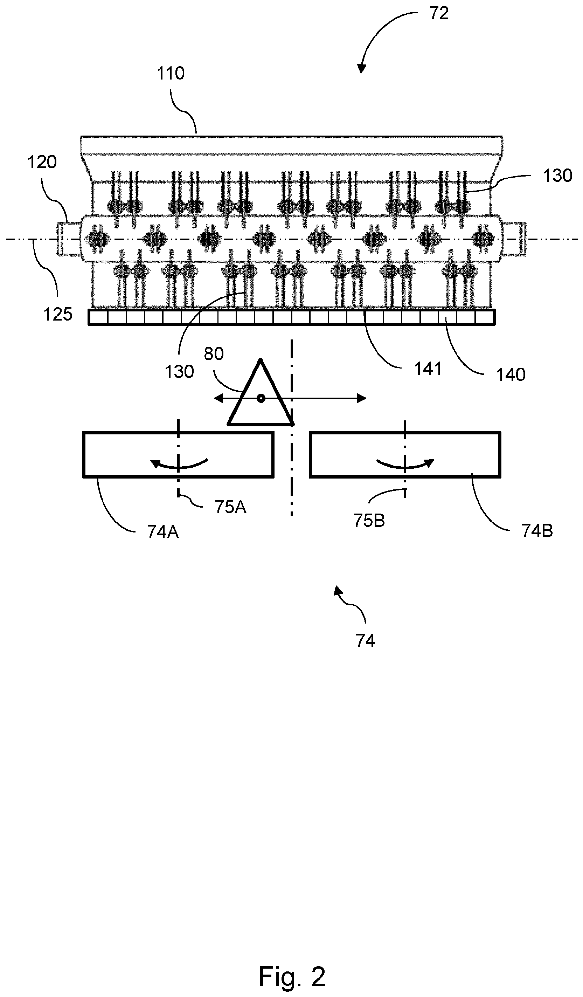

Figure 2 schematically shows a rear view of part of elements of a combine harvester 10 according to an embodiment of the invention. It is noted that the invention is not limited to use in combine harvesters only but may be useful for any type of agricultural harvester comprising a crop chopper and crop spreaders similar to those described herein.

Figure 2 schematically shows a straw chopper 72 with a chopper housing 110, a rotational axle 120 carrying a plurality of knives 130, and a counter knife 140. The chopper housing 110 comprises an inlet for receiving unchopped straw and an outlet for releasing chopped straw. The rotational axle 120 is mounted to the chopper housing 110 or some other part of the combine harvester 10 for rotation around a chopper axis 125. The knives 130 extend radially from the rotational axle 120 and are configured for rotating therewith. The knives 130 and the counter knife 140 are configured to cooperatively exert a chopping action on the received straw. The knives 130 used in such straw choppers 72 are often flail knives. The counter knife 140 is typically provided as a bar comprising a plurality of parallel counter knives 141 or counter knife blades 141, positioned such that, during use, the chopper knives 130 on the rotational axle 120 move through gaps between two adjacent counter knife blades 141. In some embodiments, two or more counter knife bars 140 may be provided for providing increased cutting action.

Also visible in Figure 2 are the left and right spreader units 74A, 74B of the spreader system 74 of this combine harvester 10. The two spreader units 74A, 74B rotate around their respective central axes 75A, 75B in opposite directions to expel the chopped straw laterally and away from the combine harvester 10. Chaff and other small MOG coming from the cleaning system 26 may be mixed in with the straw residue to be spread together therewith. On its way from the outlet of the chopper housing 110 to the inlets of the spreader units 74A, 74B, the chopped crop passes a crop divider 80 that is arranged to direct a first portion of the chopped crop towards the left spreader unit 74A and a second portion of the chopped crop towards the right spreader unit 74B. An actuator (not shown) is coupled to the crop divider 80 to move the crop divider 80 relative to the spreader system 74 in order to adjust a ratio of the first portion and the second portion.

In this embodiment, the actuator is arranged to move the crop divider 80 sidewards from a central position between the left spreader unit 74A and the right spreader unit 74B. In the central or neutral position, the ratio of the of the first portion and the second portion will approximately be 1:1, i.e. both spreader units 74A, 74B spread substantially the same amount of chopped crop. When moving the crop divider 80 sidewards to the left, the second portion of the chopped crop, i.e. the chopped crop portion fed into the right spreader unit 74B, increases. When moving the crop divider 80 sidewards to the right, the first portion of the chopped crop, i.e. the chopped crop portion fed into the left spreader unit, increases. Moving the crop divider 80 sidewards may, e.g., be effected by moving the crop divider along a rail or rails, but many other mechanical arrangements may enable the same.

In exemplary embodiments, the actuator is and electromechanical actuator, a pneumatic actuator, or a hydraulic actuator. The harvester 10 preferably comprises a controller, coupled to the actuator for controlling the actuator. The control of the actuator may be performed by a human operator, for example through a graphical user interface on a display screen visible from a seat in a driver cabin 22 of the agricultural harvester 10. Preferably, the control of the actuator is partly or fully automated, and based on sensor input and/or digitally stored information about the field, the crop, and the harvester 10.

By adjusting the ratio of the first and second portions, it is made possible to feed more chopped crop through the spreader unit 74A, 74B that covers a larger portion of the total spreading width behind the harvester 10. As a result, the distribution of crop behind the harvester 10 will be more even. When, for example, the rotational speeds or the residue deflectors of the spreader units 74A, 74B are such that the left spreader unit 74A covers a wider area than the right spreader unit 74B, the actuator can now be used to ensure that the left spreader unit 74A spreads more material than the right spreader unit 74B to compensate for the larger surface area this material needs to cover.

Typically, the actuator will be used to move the crop divider 80 in such a way as to spread more material in an upwind or uphill direction than in a downwind or downhill direction. The actuator is similarly useful when the chopped crop is not spread over the full width of the harvester 10 or the harvester-header combination. This can, for example, be the case when the currently harvested area partially overlaps with a previously harvested area and the overlapping area is already covered with chopped crop.

Similarly, the movable crop divider 80 may be controlled by the actuator when harvesting around a corner. For example, when taking a left turn while harvesting and spreading crop residue, the back of the combine 10 turns to the right, away from the edge of the current harvest pass. As a result, the left spreader 74A needs to cover a bigger area than the right spreader 74B. By properly controlled movement of the crop divider 80, it can then be ensured that a larger portion of the total spread crop residue is directed to the left spreader 74A. This controlled adjustment of the crop divider position will thus lead to a more even distribution of the crop residue over the field.

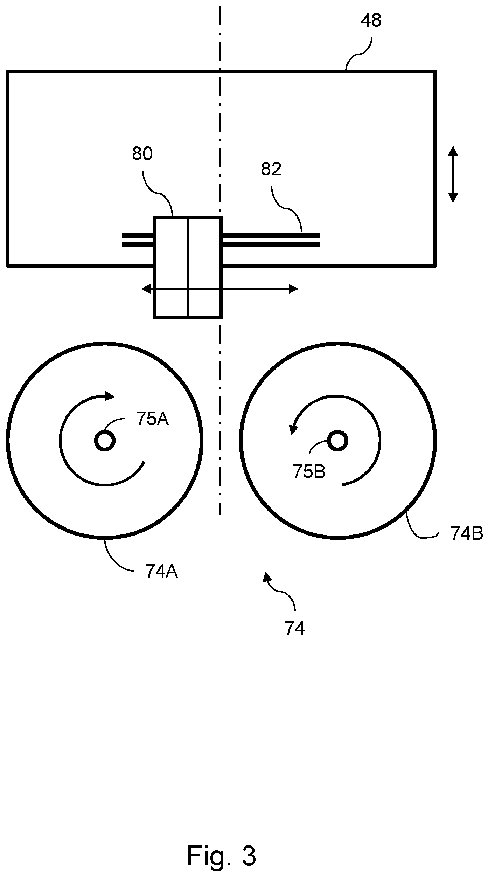

The crop divider 80 may, as in the embodiments shown in Figures 3 to 6, be mounted to the upper sieve 48 of the cleaning system 26 and move forward and backward, following the reciprocating movement of this sieve 48. In other embodiments, the movable crop divider 80 may be mounted to the spreader system 74, or directly to a chassis of the combine harvester 10. When positioned near the inlet of the spreader system 74, the crop divider 80 is optimally positioned to split and direct the crop flow from the straw chopper 72 to the respective spreader units 74A, 74B.

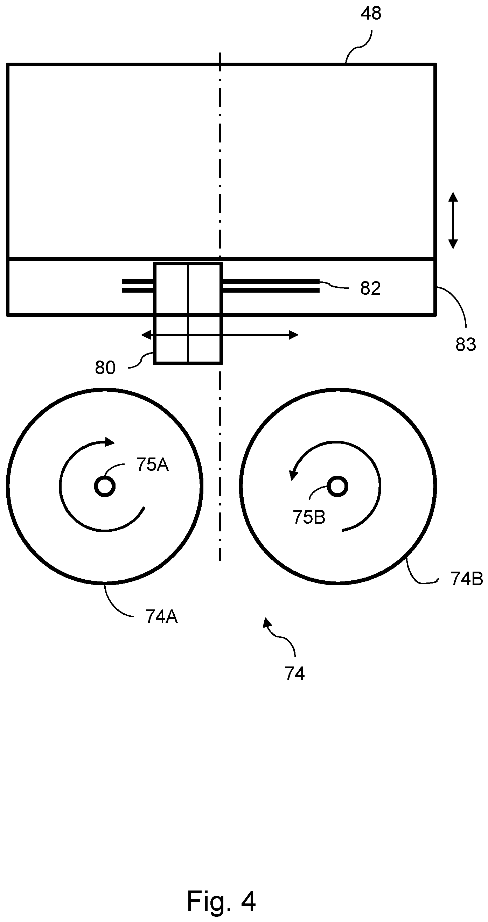

Figures 3 to 6 schematically show top views of part of elements of a combine harvester 10 according to some embodiments of the invention. In Figures 3 and 4, the crop divider 80 is slidably mounted to the upper sieve 48 of the cleaning system 26. While the crop divider 80 moves forward and backward together with the upper sieve 48, the actuator may move the crop divider 80 sidewards relative thereto. The crop divider 80 is positioned such that during a substantial portion (up to 100%) of the reciprocating motion of the upper sieve 48, the crop divider 80 is positioned in the crop flow from the straw chopper 72 to the spreader system 74. An advantage of mounting the crop divider 80 to the upper sieve 48 is that it does not only divide the chopped crop comping from the straw chopper 72 in two portions, but also the chaff coming from the cleaning system 26.

The crop divider 80 may, as in the embodiment of Figure 3, be mounted on a rail or set of rails 82 mounted on or under a downstream end of the upper sieve 48, wherein the rails 82 facilitate sideward movement of the crop divider 80. Instead of mounting the crop divider 80 directly to the upper sieve 48 itself, it may be preferred to mount the crop divider to a separate frame 83 that is mounted to and extends from the downstream end of the upper sieve 48. Figure 4 shows such an embodiment making use of a separate frame 83, which can easily be retrofitted to an existing cleaning system 26, without reducing the effective sieving area of the upper sieve 48.

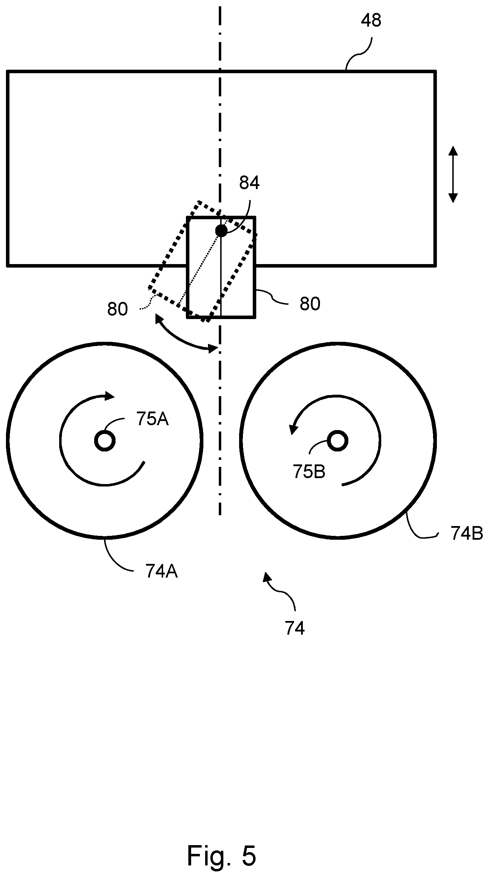

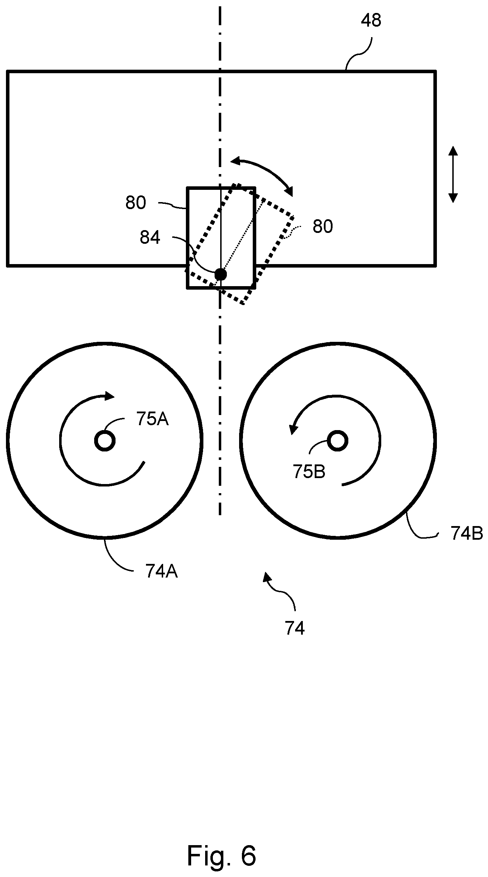

In Figures 5 and 6, the crop divider 80 is pivotably mounted to the upper sieve 48. In these embodiments, the actuator is arranged to pivot the crop divider 80 to and from a neutral orientation wherein the crop divider 80 is substantially aligned with a driving direction of the harvester 10. Again, in the central or neutral position, the ratio of the of the first portion and the second portion will approximately be 1:1, and this ratio changes when the crop divider 80 pivots away from its neutral position. As can clearly be observed by comparing Figure 5 to Figure 6, the effect of a rotation of the crop divider 80 on this ratio partly depends on a position of the pivot point 84 relative to the crop divider 80. However, generally, pivoting the downstream end of the crop divider to the left (as indicated by the dotted line versions of the crop divider 80) will cause more chopped crop coming from the right side of the straw chopper 72 to be fed into the left spreader unit 74A, thereby increasing the ratio.

In special embodiments, the actuator may be arranged to cause a combination of a translational and a rotational motion of the crop divider 80. A skilled engineer will be able to come up with further variations of movable and adjustable crop dividers that can be controlled to adjust the ratio of the volumes of chopped crop that is fed into each one of the respective spreader units 74A, 74B.

## Claims

1. An agricultural harvester (10) comprising:
- a crop chopper (72) with an inlet for receiving unchopped crop and an outlet for releasing chopped crop;
- a crop spreader (74) arranged to receive the chopped crop from the crop chopper (72) and comprising a left spreader unit (74A) and a right spreader unit (74B), each configured to spread a portion of the chopped crop towards respective opposite sides of the harvester (10);
- a crop divider (80), arranged downstream the crop chopper (72) and upstream the crop spreader (74), and arranged to direct a first portion of the chopped crop towards the left spreader unit (74A) and a second portion of the chopped crop towards the right spreader unit (74B); and
- an actuator, arranged to move the crop divider (80) relative to the crop spreader (74) in order to adjust a ratio of the first portion and the second portion.

2. An agricultural harvester (10) as claimed in claim 1, wherein the actuator is arranged to move the crop divider (80) sidewards from a central position between the left spreader unit (74A) and the right spreader unit (74B).

3. An agricultural harvester (10) as claimed in claim 1 or 2, wherein the actuator is arranged to pivot the crop divider (80) to and from a neutral orientation wherein the crop divider (80) is substantially aligned with a driving direction of the harvester (10).

4. An agricultural harvester (10) as claimed in any preceding claim, wherein the actuator is and electromechanical actuator, a pneumatic actuator, or a hydraulic actuator.

5. An agricultural harvester (10) as claimed in any preceding claim, further comprising a controller, coupled to the actuator for controlling the actuator.

6. An agricultural harvester (10) as claimed in claim 5, wherein the controller is configured to control the actuator in order to adjust the ratio of the first portion and the second portion in such a way that more chopped crop is spread in an upwind or uphill direction than in a downwind or downhill direction.

7. An agricultural harvester (10) as claimed in any preceding claim, further comprising at least one reciprocating grain sieve (46, 48, 50), configured to move back and forth in a direction substantially aligned with a driving direction of the harvester (10), and wherein the crop divider (80) is mounted to the grain sieve (46, 48, 50) for reciprocating therewith.

8. An agricultural harvester (10) as claimed in any preceding claim, wherein the crop divider (80) is movably mounted to the crop spreader (74).

9. An agricultural harvester (10) as claimed in any preceding claim, wherein the agricultural harvester (10) is a combine harvester (10) and the crop chopper (72) is a straw chopper (72).
